# EUROPÄISCHE PATENTANMELDUNG

(11) **EP 1 520 796 A1**
(43) Veröffentlichungstag der Anmeldung: **06.04.2005**
(21) Anmeldenummer: 03405705.9
(22) Anmeldetag: 30.09.2003
(51) Int. Cl.: B65D 35/16

(54) **Tube aus Kunststoff mit Innenbeschichtung und Verfahren zur Herstellung derselben**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Bei einer Tube (10) aus Kunststoff, mit einem Tubenrumpf (12) und einem Tubenkopf (14), ist eine Barriereschicht (24) und gegebenenfalls eine Korrosionsschutzschicht (25) an der inneren Oberfläche des Tubenrumpfes (12) und des Tubenkopfes (14) angeordnet. Die Barriereschicht steht mit dem Füllgut in direktem Kontakt. Damit wird erreicht, dass Bestandteile aus dem Füllgut nicht in den Kunststoff migrieren können. Die direkt an der Innenseite der Tube angeordnete Barriereschicht erlaubt auch das Abpacken aggressiver Füllgüter.

## Beschreibung

Die Erfindung betrifft eine Tube aus Kunststoff, mit einem Tubenrumpf und einem Tubenkopf, mit einer Barriereschicht als Durchtrittssperre für Wasserdampf und Gase, sowie ein Verfahren zur Herstellung der beschichteten Tube.

Zur Herstellung von Tuben aus Kunststoff mit einer Barriereschicht werden heute mehrschichtige Kunststofflaminate mit im Inneren der Laminate angelegten Barriereschichten verwendet. Der Grund liegt darin, dass bei der Tubenherstellung aus durch Extrusionskaschierung oder im Gast-Verfahren gefertigtem Laminat die Innenseite gegen die Aussenseite gesiegelt wird. Die meisten der als Barriereschicht geeigneten Materialien lassen sich jedoch nicht siegeln oder geben eine ungenügende Dichtigkeit im Siegelbereich. Als Barriereschicht auf der Innenseite verwendetes blankes Aluminium kann zwar gegen die Aussenseite gesiegelt werden, jedoch tritt hier Korrosion beim direkten Kontakt mit dem Füllgut auf.

Zu den bekannten Barriereschichten mit Durchtrittsperrwirkung für Wasserdampf und Gase gehören organische Barriereschichten wie beispielsweise Polyvinylidenchlorid (PVDC) oder ein unter der Bezeichnung ACLAR® bekannt gewordenes Fluorpolymer. Für sauerstoffempfindliche Füllgüter sind auch die Polymere des Ethylvinyl-Alkohols (EVOH) als Sperrschicht bekannt. Weitere bekannte Polymere mit Barrierewirkung sind Polyethylenterephtalat (PET) sowie Polyethylen-2,6-Naphtalat (PEN).

Zu den anorganischen Barriereschichten gehört Aluminium, das in Form einer Folie oder auch als aus dem Vakuum aufgedampfte Schicht eingesetzt wird. Bekannt sind auch durch im Vakuum-Dünnschichtverfahren mittels PVD (Physical Vapour Deposition)- oder CVD (Chemical Vapour Deposition)- Techniken aufgebrachte keramische Beschichtungen aus Al₂O₃ oder aus SiOₓ, wobei x eine Zahl zwischen 0.9 und 2 ist.

Die vorstehend genannten organischen Barriereschichten haben wesentliche Nachteile. So enthalten sowohl ACLAR® als auch PVDC Chlor, ACLAR® darüber hinaus auch noch Fluor, weshalb beide Materialien nur schwer zu entsorgen sind. Zudem sind beide Materialien verhältnismässig teuer. EVOH besitzt keine gute Wasserdampfsperreigenschaft und nimmt Feuchtigkeit auf, wodurch die Barriereeigenschaften verringert werden.

Der Erfindung liegt die Aufgabe zugrunde, eine kostengünstige Tube der eingangs genannten Art zu schaffen, die eine einfache Herstellung ermöglicht und bei der die Barriereschicht hinsichtlich ihrer Wirkung optimal angeordnet ist.

Zur erfindungsgemässen Lösung der Aufgabe führt bei einer Tube der eingangs genannten Art, dass die Barriereschicht an der inneren Oberfläche des Tubenrumpfes und des Tubenkopfes angeordnet ist.

Die Barriereschicht steht mit dem Füllgut in direktem Kontakt. Damit wird erreicht, dass Bestandteile aus dem Füllgut nicht in den Kunststoff migrieren können. Die direkt an der Innenseite der Tube angeordnete Barriereschicht erlaubt auch das Abpacken aggressiver Füllgüter.

Die Barriereschicht kann so ausgewählt werden, dass sie gleichzeitig eine Korrosionsschutzschicht gegen aggressive Füllgüter ist. Eine Korrosionsschutzschicht kann aber auch zusätzlich zur Barriereschicht an der inneren Oberfläche des Tubenrumpfes und des Tubenkopfes angeordnet sein.

Eine gute Barrierewirkung mit Korrosionsschutzeigenschaften ergibt sich, wenn die innere Oberfläche von Tubenrumpf und Tubenkopf mit Oxiden von Metallen oder Halbmetallen oder mit einem Ormocer-Lack beschichtet ist. Auf der oxidischen Schicht kann zusätzlich noch eine Schicht aus einem Ormocer angeordnet sein.

Als Metalloxid eignet sich insbesondere Al₂O₃, als Halbmetalloxid SiOₓ mit 0.9 < x <2, insbesondere 1.2 < x < 1.8. Die Innenbeschichtung kann auch aus Mischungen von metallischen und halbmetallischen Oxiden bestehen.

Als Kunststoff für die Tube können beispielsweise folgende Werkstoffe eingesetzt werden:
- Polyethylen (PE) z. B. LPDE (niedrige Dichte), LLDPE (linear, niedrige Dichte), LMDPE (linear, mittlere Dichte), HDPE (hohe Dichte)
- PE/Metallozene
- Polypropylen (PP)
- PP/PE-Blend
- Polyethylenterephtalat (PET)
- Polyvinylchlorid (PVC)
- Polystyrol (PS)
- Cyclo-Olefin-Copolymer (COC)
- PE/COC/PE
- PP/COC/PP
sowie weitere Schichtkombinationen der genannten Kunststoffe, wobei diese auch geschäumt sein können.

Die Herstellung der Tube kann grundsätzlich mit den folgenden Verfahren erfolgen:
1. Der Tubenrumpf und der Tubenkopf werden als Einheit aus dem Kunststoff spritzgegossen und die innere Oberfläche vom Tubenrumpf und Tubenkopf mit der Barriereschicht und optional mit einer Korrosionsschutzschicht versehen.
2. Der Tubenrumpf wird als Tubenrohr aus dem Kunststoff extrudiert oder aus dem in Folienform vorliegenden Kunststoff als Tubenrohr gebildetet und der Tubenkopf wird spritzgegossen. Die innere Oberfläche von Tubenrumpf und Tubenkopf wird mit der Barriereschicht und gegebenenfalls mit einer Korrosionsschutzschicht versehen. Anschliessend wird der Tubenrumpf mit dem Tubenkopf verbunden.
3. Der Tubenrumpf wird als Tubenrohr aus dem Kunststoff extrudiert oder aus dem in Folienform vorliegenden Kunststoff als Tubenrohr gebildetet und der Tubenkopf wird spritzgegossen. Der Tubenrumpf wird mit dem Tubenkopf verbunden und anschliessend wird die innere Oberfläche von Tubenrumpf und Tubenkopf wird mit der Barriereschicht und gegebenenfalls mit einer Korrosionsschutzschicht versehen.

Zur Erzielung einer einwandfreien Siegelung der Tube wird der für die Versiegelung des dem Tubenkopf fernen Endes des Tubenrumpfes vorgesehene Randbereich an der inneren Oberfläche des Tubenrumpfes vor dem Aufbringen der Barriereschicht und gegebenenfalls der Korrosionsschutzschicht abgedeckt. Dies erfolgt beispielsweise mittels eines Abdeckringes.

Die Beschichtung der Innenseite der Tube oder des Tubenrohrs erfolgt zweckmässigerweise im Durchströmverfahren oder als 3D-Beschichtung.

Wird die Tube im Injection Molded Labeling-Verfahren gefertigt, kann durch Verwendung eines Labels mit Barriereeigenschaften an der äusseren Oberfläche der Tube eine zusätzliche Barriereschicht angebracht werden. Diese besteht beispielsweise aus einer Aluminiumfolie, einer mit Oxiden bedampften oder einer mit Ormoceren beschichteten Folie.

Da die zur Versiegelung am Tubenende erforderliche Fläche ausgespart ist, können als Kunststoffe für die Tube auch kostengünstige Monomaterialien eingesetzt werden.

Die Befüllung und Versiegelung der Tuben kann auf bestehenden Anlagen erfolgen.

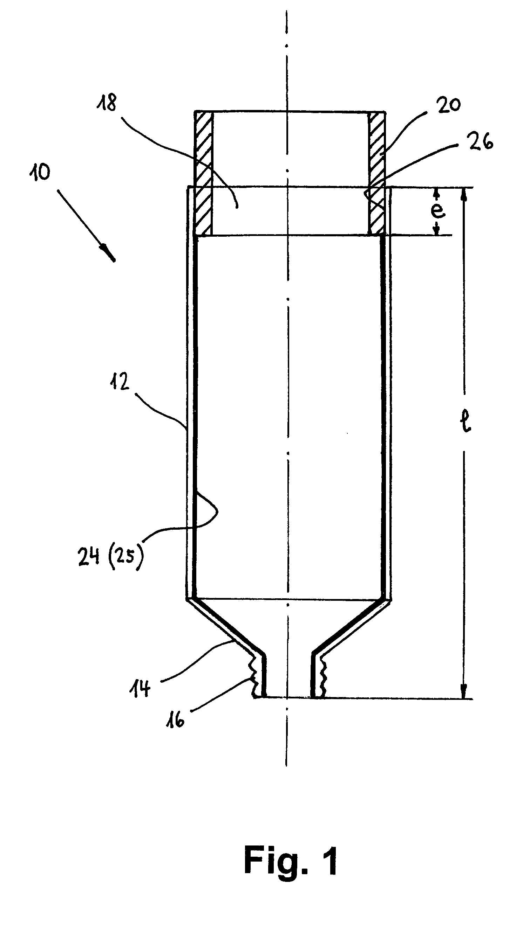

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Längsschnitt durch eine Tube mit Innenbeschichtung.

Eine in Fig. 1 gezeigte Tube 10 weist einen rohrförmigen Tubenrumpf 12 auf, an dessen einen Ende ein Tubenkopf 14 mit einem Gewinde 16 für einen nicht gezeigten Schraubdeckel angeordnet ist. Das dem Tubenkopf 14 entgegengesetzte offene Ende 18 wird erst nach Befüllung der Tube 10 in einem Siegelwerkzeug flachgedrückt und durch Siegeln der Innenseite gegen sich selbst verschlossen.

Die Innenseite von Tubenrumpf 12 und Tubenkopf 14 ist mit einer Barriereschicht 24 versehen, die gleichzeitig als Korrosionsschutzschicht ausgebildet ist. Neben der Barriereschicht 24 kann auch eine separate Korrosionsschutzschicht 25 vorgesehen werden. Da die Barriereschicht 24 bzw. die Korrosionsschutzschicht 25 üblicherweise aus Materialien bestehen, die eine Siegelung verunmöglichen würden, wird zur Herstellung einer beschichtungsfreien Randzone 26 vom offenen Ende 18 des Tubenrumpfes 12 her vor der Durchführung der Beschichtung ein Abdeckring 20 um ein der Breite e der beschichtungsfreien Randzone 26 entsprechendes Mass in den Tubenrumpf 12 eingeführt und mit der Innenseite des Tubenrumpfes 12 in formschlüssigen Kontakt gebracht. Der Abdeckring 20 ist mit einer nicht gezeigten Einrichtung versehen, die den gegebenenfalls segmentierten Abdeckring in Anlage mit der Innenseite des Tubenrumpfes 12 bringt. Der Abdeckring kann auch Öffnungen zum Anlegen eines Unterdrucks aufweisen, so dass sich die Tubeninnenseite in der beschichtungsfreien Randzone 26 an den Abdeckring 20 anlegt. Die Innenbeschichtung der Tube 10 erfolgt sodann mit angelegtem Abdeckring 20.

In der nachstehenden Tabelle sind Kombinationen von Tuben-Werkstoffen und Innenbeschichtungen beispielhaft zusammengestellt.

| **Beispiel** | **Tubenmaterial** | **Innenbeschichtung** |
|---|---|---|
| 1 | LDPE | SiOₓ |
| 2 | LDPE | Al₂O₃ |
| 3 | LDPE | Al₂O₃, lackiert mit Ormocer |
| 4 | Coextrudat LDPE/COC/LDPE | SiOₓ |
| 5 | PET | SiOₓ |
| 6 | PET | Al₂O₃ |
| 7 | PVC | Ormocer |
| 8 | PP/PE | SiOₓ |
| 9 | PS | Al₂O₃ |
| 10 | PS | SiOₓ |
| 11 | LLDPE/HDPE | Al₂O₃ |

## Patentansprüche

1. Tube aus Kunststoff, mit einem Tubenrumpf (12) und einem Tubenkopf (14), mit einer Barriereschicht (24) als Durchtrittssperre für Wasserdampf und Gase,
**dadurch gekennzeichnet, dass**
die Barriereschicht (24) an der inneren Oberfläche des Tubenrumpfes (12) und des Tubenkopfes (14) angeordnet ist.

2. Tube nach Anspruch 1, **dadurch gekennzeichnet, dass** die Barriereschicht (24) gleichzeitig eine Korrosionsschutzschicht gegen aggressive Füllgüter ist.

3. Tube nach Anspruch 1, **dadurch gekennzeichnet, dass** zusätzlich zur Barriereschicht (24) eine Korrosionsschutzschicht (25) an der inneren Oberfläche des Tubenrumpfes (12) und des Tubenkopfes (14) angeordnet ist.

4. Tube nach einem der Ansprüche 1 bis 3, **dadurch gekennzeichnet, dass** die innere Oberfläche von Tubenrumpf (12) und Tubenkopf (14) mit Oxiden von Metallen oder Halbmetallen oder mit einem Ormocer-Lack beschichtet ist.

5. Tube nach Anspruch 4, **dadurch gekennzeichnet, dass** auf der oxidischen Schicht eine Schicht aus einem Ormocer angeordnet ist.

6. Tube nach Anspruch 4, **dadurch gekennzeichnet, dass** das Metalloxid Al₂O₃ und das Halbmetalloxid SiOₓ mit 0.9 < x < 2, insbesondere 1.2 < x < 1.8 ist.

7. Verfahren zur Herstellung einer Tube (10) aus Kunststoff, mit einem Tubenrumpf (12) und einem Tubenkopf (14), mit einer Barriereschicht (24) als Durchtrittssperre für Wasserdampf und Gase, **dadurch gekennzeichnet, dass** der Tubenrumpf (12) und der Tubenkopf (14) als Einheit aus dem Kunststoff spritzgegossen und die innere Oberfläche von Tubenrumpf (12) und Tubenkopf (14) mit der Barriereschicht (24) und optional mit einer Korrosionsschutzschicht (25) versehen wird.

8. Verfahren zur Herstellung einer Tube (10) aus Kunststoff, mit einem Tubenrumpf (12) und einem Tubenkopf (14), mit einer Barriereschicht (24) als Durchtrittssperre für Wasserdampf und Gase, **dadurch gekennzeichnet, dass** der Tubenrumpf (12) als Tubenrohr aus dem Kunststoff extrudiert oder aus dem in Folienform vorliegenden Kunststoff als Tubenrohr gebildet und der Tubenkopf (14) spritzgegossen, die innere Oberfläche von Tubenrumpf (12) und Tubenkopf (14) mit der Barriereschicht (24) und optional mit einer Korrosionsschutzschicht (25) versehen und der Tubenrumpf (12) mit dem Tubenkopf (14) verbunden wird.

9. Verfahren zur Herstellung einer Tube (10) aus Kunststoff, mit einem Tubenrumpf (12) und einem Tubenkopf (14), mit einer Barriereschicht (24) als Durchtrittssperre für Wasserdampf und Gase, **dadurch gekennzeichnet, dass** der Tubenrumpf (12) als Tubenrohr aus dem Kunststoff extrudiert oder aus dem in Folienform vorliegenden Kunststoff als Tubenrohr gebildet und der Tubenkopf (14) spritzgegossen, der Tubenrumpf (12) mit dem Tubenkopf (14) verbunden und die innere Oberfläche von Tubenrumpf (12) und Tubenkopf (14) mit der Barriereschicht (24) und gegebenenfalls mit einer Korrosionsschutzschicht (25) versehen wird.

10. Verfahren nach einem der Ansprüche 7 bis 9, **dadurch gekennzeichnet, dass** ein für die Versiegelung des dem Tubenkopf (14) fernen Endes (18) des Tubenrumpfes (12) an dessen inneren Oberfläche vorgesehener Randbereich (26) vor dem Aufbringen der Barriereschicht (24) und gegebenenfalls der Korrosionsschutzschicht (25) abgedeckt wird.
